# EUROPÄISCHE PATENTSCHRIFT

(11) **EP 1 657 565 B1**
(45) Veröffentlichungstag und Bekanntmachung des Hinweises auf die Patenterteilung: **24.01.2007**
(21) Anmeldenummer: 05022753.7
(22) Anmeldetag: 19.10.2005
(51) Int. Cl.: G01S 13/20, G01S 13/22, G01S 7/292

(54) **Verfahren zur Detektion und Entfernungsbestimmung von Zielen mittels einer HPRF-Radaranlage**
Method for detecting and determining range of targets by means of HPRF-radar
Procédé permettant de détecter et de déterminer les distances des cibles par radar HPRF

(30) Priorität: 10.11.2004 DE 102004054198
(43) Veröffentlichungstag der Anmeldung: 17.05.2006
(73) Patentinhaber: EADS Deutschland GmbH, 85521 Ottobrunn (DE)
(72) Erfinder: Strecker, Andreas, 73066 Uhingen (DE); Wieszt, Andreas, 89231 Neu-Ulm (DE); Al-Youssof, Nergess, 89079 Ulm/Wiblingen (DE); Mahr, Thomas, 89171 Illerkirchberg (DE)
(74) Vertreter: Meel, Thomas

(56) Entgegenhaltungen:
- EP-A- 0 251 498
- US-A- 4 057 800
- US-A- 5 294 932
- GERLACHI K: "SECOND TIME AROUND RADAR RETURN SUPPRESSION USING PRI MODULATION" IEEE TRANSACTIONS ON AEROSPACE AND ELECTRONIC SYSTEMS, IEEE SERVICE CENTER, PISCATAWAY, NJ, US, Bd. 25, Nr. 6, 1. November 1989 (1989-11-01), Seiten 854-862, XP000096180 ISSN: 0018-9251

## Beschreibung

Die Erfindung betrifft ein Verfahren zur Detektion und Entfernungsbestimmung von Zielen mittels einer HPRF-Radaranlage gemäß dem Oberbegriff des Patentanspruchs 1.

Radarsysteme kommen in fliegenden, schwimmenden oder bodengestützten Plattformen zum Einsatz. Dabei werden im Betrieb verschiedene Waveformen verwendet, um den verschiedenen Einsatz-Szenarien bzw. den Anforderungen an das jeweilige Radarsystem gerecht zu werden. Eine solche Waveform ist High-PRF.

Ein wichtiges Einsatz-Szenario von HPRF-Radaren ist z.B. die Selbstverteidigung von Schiffen in küstennahen Gebieten, wo die Entdeckung von sehr schnell, niedrig fliegenden, schwer detektierbaren, hoch manövrierbaren und plötzlich auftauchenden Raketen ohne Vorwarnung überlebensnotwendig ist. Repräsentiert werden solche Bedrohungen in küstennahen Gebieten durch so genannte Anti-Ship-Cruise Missiles (ASCM), die eine reduzierte Detektierbarkeit (Radarquerschnitt beträgt ca. 0.01 m²) besitzen und damit die Reaktionszeit zur Bekämpfung erheblich verkürzen.

Als Konsequenz auf diese neue Situation sind bessere Sensoren notwendig, die fähig sind, sogar unter starkem Clutter, wie zum Beispiel Reflexionen von Klippen oder Fjorden, diese Ziele zu detektieren. Außerdem sollen die Sensoren bzw. Radare diese kleinen Raketen von dem Land- und Seeverkehr, Windmühlen und Vögeln, deren Rückstreuquerschnitt ebenfalls in der Größenordnung der kleinen Raketen liegt, bereits bei der Detektion unterscheiden können.
Aus US 5,294,932 ist ein Verfahren zur gleichzeitigen Bestimmung der Entfernung und der Geschwindigkeit eines Ziels mittels einer Radaranlage bekannt, welche nach dem HPRF-Verfahren arbeitet. Das Empfangssignal, welches im Wesentlichen dem reflektierten Sendesignal entspricht, wird hierbei im Dopplerbereich ausgewertet und dabei die Gruppenlaufzeit des den bewegten Ziels zugeordneten Zielspektrums ermittelt. Aus der Gruppenlaufzeit wird dann die Geschwindigkeit des Ziels bestimmt.

In Situationen mit einer hohen Anzahl von Zielen sind Radare notwendig, die einerseits sehr kleine Ziele detektieren können und andererseits bei diesen kleinen Zielen die Bedrohlichen von den Nichtbedrohlichen unterscheiden können. Des Weiteren muss die Reaktionszeit, bis ein kleines Ziel als Bedrohung erkannt wird, ebenfalls sehr stark reduziert werden, damit noch ausreichend Zeit für Abwehrmaßnahmen besteht.

Es ist somit Aufgabe der Erfindung, ein Verfahren anzugeben, mit welchem die Nachteile der bekannten Radarverfahren beseitigt werden können.

Diese Aufgabe wird mit dem Verfahren gemäß Anspruch 1 gelöst. Vorteilhafte Ausführungen der Erfindung sind Gegenstand von Unteransprüchen.

Die Erfindung umfasst folgende Verfahrensschritte :
- aufeinander folgende Bursts werden mit einer vorgebbaren Zeitverzögerung gesendet, wobei die Zeitverzögerung einer Dauer von einer vorgebbaren Anzahl E von Sendeimpulsen entspricht, derart dass innerhalb der zeitverzögerung der letzte gesendete Sendeimpuls von der instrumentierten Reichweite empfangen wird,
- die Echosignale werden in den Empfangszeitfenstern zwischen den einzelnen Sendeimpulsen und in der Zeitverzögerung zwischen aufeinander folgenden Bursts empfangen,
- es wird ein Datensatz von A*(Z+E) detektierten Signalen erzeugt, wobei Z die Anzahl der Sendeimpulse innerhalb eines Bursts ist und wobei jedes detektierte Signal eine Überlagerung von Echosignalen aus unterschiedlichen Vielfachen des eindeutigen Entfernungsbereichen ist, wobei jeder eindeutige Entfernungsbereich eine Anzahl A von Entfernungstoren umfasst,
- zur Detektion eines Zieles wird für jedes Entfernungstor das Spektrum einer Z+E-Punkte-Fast-Fourier-Transformation berechnet, wobei auf ein Ziel in einem Entfernungstor entschieden wird, wenn die Signalamplitude größer als ein vorgebbarer Schwellwert ist,
- zur Bestimmung der exakten Entfernung eines Ziels werden für die Entfernungstore Spektren von Z-Punkte-Fast-Fourier-Transformationen berechnet, derart, dass ein Z-Punkte-FFT-Fenster schrittweise über die Z+E detektierten Signale eines Entfernungstors geschoben wird
- durch Vergleichen der einzelnen Spektren wird der Entfernungsbereich mit der größten Ziel-Signalamplitude ermittelt.

Das erfindungsgemäße Verfahren sowie weitere vorteilhafte Ausführungen werden im Folgenden anhand von Figuren näher erläutert. Es zeigen:
- Fig. 1: das Prinzip der Überfaltung durch den verringerten eindeutigen Entfernungsbereich,
- Fig. 2: eine beispielhafte spektrale Aufteilung von unterschiedlichen schnelleren Zielen mit Clutter nach der Fourier-Analyse,
- Fig. 3: das Prinzip der sliding-FFT an einem beispielhaften Datensatz umfassend 10 Entfernungstore mit jeweils 12 Entfernungs bereichen,

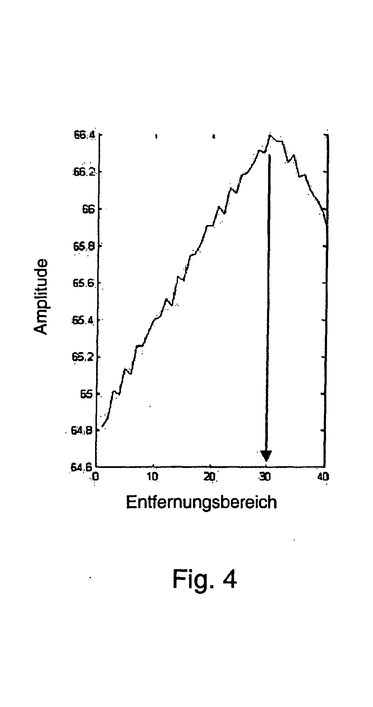

- Fig. 4: ein beispielhaftes einzelnes Spektrum aus einer sliding-FFT gemäß der Fourier-Analyse in Fig.2.

Befinden sich beispielsweise zwei Ziele in unterschiedlicher Distanz zum Radarsensor, dann tritt der Fall auf, dass Reflexionen von beiden Zielen zum gleichen Zeitpunkt beim Empfänger ankommen und sich dort auf addieren. Das gleiche geschieht auch mit Clutter aus unterschiedlichen Entfernungsbereichen. Dieser Effekt wird Überfaltung genannt. Wird eine instrumentierte Reichweite von zum Beispiel 40 km und ein Eindeutigkeitsbereich von 1 km angenommen, so kommt es zu einer 40-fachen Überfaltung im Empfänger, sofern 40 Pulse ausgesendet werden.

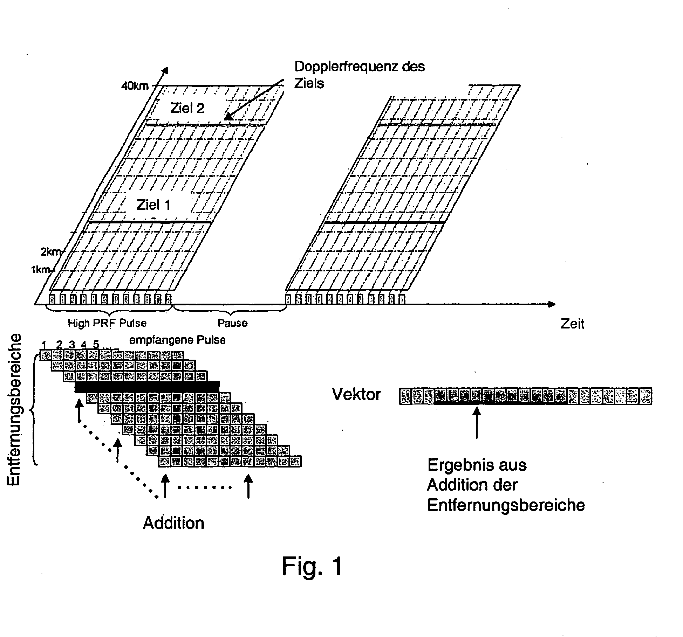

Fig. 1 zeigt das Prinzip der Überfaltung bei der so genannten "interrupted high PRF waveform". Die Bezeichnung "interrupted" kommt von dem Vorgang, dass nach Aussenden des Bursts erfindungsgemäß eine Pause gemacht wird, bis der letzte gesendete Puls von der instrumentierten Reichweite empfangen ist. Zur Vereinfachung der Darstellung sind hier beispielhaft bei einer instrumentierten Reichweite von 40 km lediglich 12 Pulse dargestellt mit einer entsprechenden Pause von 11 Pulsen.

Im Weiteren wird beispielhaft für einen Burst eine Folge von Z=128 Sendepulsen angenommen. Die Pause zwischen aufeinander folgenden Bursts entspricht dabei beispielsweise der Dauer des Aussendens von E=40 Pulsen (bei instrumentierter Reichweite von 40 km). Der Empfänger detektiert dabei die Reflexionen für die Dauer des Sendens plus der angehängten Pause, da in dieser Zeit auch noch Signale empfangen werden. Alle detektierten Signale werden dann einem Burst zugeordnet.
Wird eine Entfernungstortänge von z.B. 40 m angenommen, dann kann der eindeutige Entfernungsbereich von 1 km in A=25 Entfernungstore unterteilt werden. Umgekehrt ist es selbstverständlich auch möglich, die Anzahl A der Entfernungstore vorzugeben, wodurch sich in einem eindeutigen Entfernungsbereich eine bestimmte Entfernungstorlänge ergibt.
Durch die festen Pulsabstände werden bei der Überfaltung die einzelnen Entfernungsbereiche übereinander gelegt und die Inhalte der jeweiligen Entfernungstore addiert (In Fig. 1 rechts unten sind die einzelnen Entfernungsbereiche als einzelner Kasten dargestellt).
Der resultierende Datensatz der empfangenen Signale hat die Dimension der 25 Entfernungstore multipliziert mit der Summe aus Anzahl der Pulse und notwendiger Pause. Dieser Datensatz wird anschließend prozessiert und ausgewertet.

Vorteilhaft wird eine Filterung des Clutters im Zeitbereich durchgeführt. Die hohe Amplitude des Clutters wird vorteilhaft noch vor der ersten Fourier-Transformation reduziert. Zur Clutterfilterung kann zweckmäßig eine Fensterfunktion z.B.Chebychev angewendet werden, die das Filtern des Clutters verbessert.
Eine weitere Möglichkeit der Clutterfilterung ist ein einfacher DC-Filter. Er filtert den Gleichanteil oder einen großen Amplitudenwert mit einer Frequenz nahe null heraus. Die Funktionsweise ist folgendermaßen: bei Auftreten eines Amplitudenwertes, der größer als ein definierter Schwellwert ist, wird diesem und den folgenden Amplitudenwerten (bis zur Burst-Länge) der erste überhöhte Amplitudenwert subtrahiert. Dadurch wird die gesamte Signalamplitude um einen konstanten Wert verringert. Der dadurch bewirkte Amplitudensprung im Zeitbereich wirkt sich auf die späteren Fourier-Transfomation nicht mehr in überhöhten Nebenzipfel aus, welche die Ziele verdecken können.
Zweckmäßig kann die Clutterfilterung auch durch einen Hochpass-Filter realisiert werden. Dieser Hochpass-Filter, der ebenfalls wie der DC-Filter im Zeitbereich noch vor der Fourier-Transformation eingesetzt wird, filtert den Clutter im unteren Frequenzbereich heraus.
Eine weitere vorteilhafte Möglichkeit der Clutterfilterung ist die Verwendung eines Clutterschätzers. Mit dem Clutterschätzer wird sehr hoher Clutter, welcher durch Klippen oder Dickschiffe erzeugt wird (Clutter/Ziel Amplitudenverhältnis von >10⁶), eliminiert. Der Clutterschätzer untersucht das empfangene Signal auf sehr hohe Sprünge im Zeitbereich. Werden starke Sprünge detektiert, dann wird die Frequenz, Phase und Amplitude des Clutters geschätzt. Das geschätzte Signal wird anschließend vom empfangenen Signal im Zeitbereich subtrahiert.

Nach der Clutterfilterung wird der Datensatz der detektierten Signale burstweise prozessiert. Dabei kommt die diskrete Fast-Fourier-Transformation (FFT) zum Einsatz.

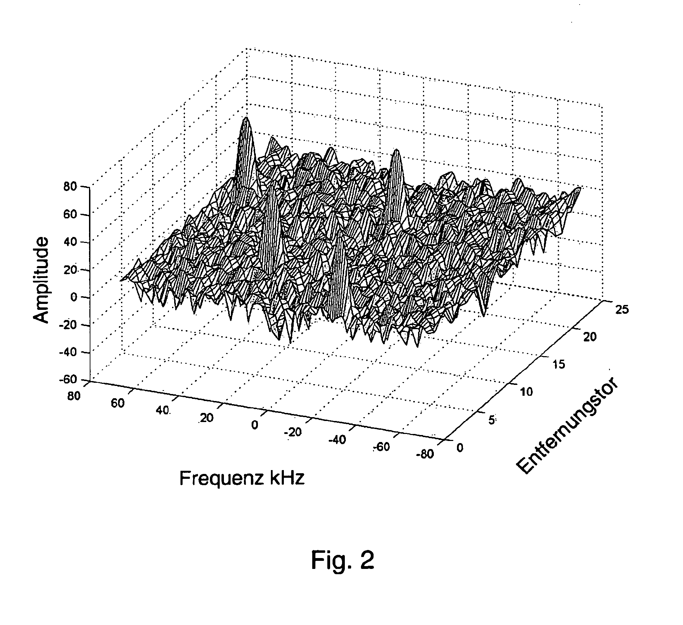

Fig. 2 zeigt beispielhaft die Prozessierung einer 168 Punkte-FFT (128 Sendepulse pro Burst plus 40 Pulse der Pause zwischen zwei aufeinander folgenden Bursts).
Im Beispiel des prozessierten Datensatzes sind nur Rauschen und vier Ziele enthalten.
Die Ziele besitzen unterschiedliche Dopplerfrequenzen. Dies wird durch die Auftrennung im Spektrum deutlich. Clutter, der in dem Beispiel und der Grafik nicht enthalten ist, verschiebt sich zu sehr geringen Frequenzen und ist daher weit von den schnellen radialen Zielen entfernt. Aus diesem Grund kann bei der HPRF-Betriebsart ein schnelles radial fliegendes Ziel mit kleinem Rückstreuquerschnitt, welches meist ein sehr hohes Bedrohungspotential besitzt, bereits bei der Detektion als solches erkannt werden.
Die schnellen Ziele haben jedoch meist sehr kleine Rückstreuquerschnitte und deren Signale verschwinden im Rauschen des Empfängers. Ein Vorteil ergibt sich aber aus der Tatsache, dass durch die hohe Pulszahl ein hoher Signalverarbeitungsgewinn gewährleistet ist. Das bedeutet, dass die sehr schwachen Signale der kleinen Ziele durch die Signalprozessierung noch tief aus dem Rauschen herausgeholt werden können.

Bei der spektralen Auswertung wird für jedes der 25 Entfernungstore die 168 Punkte-FFT durchgeführt. Wenn sich in diesem Entfernungstor Ziele befinden, die über eine vorgebbare Schwellwertbedingung ermittelt werden, kann deren Dopplerfrequenz somit direkt ausgewertet und somit die radiale Geschwindigkeit der Ziele berechnet werden. Zu diesem Zeitpunkt kann sofort eine Aussage über das Bedrohungspotential getroffen werden.

Der Entfernungsbereich und damit die exakte Entfernung des Ziels wird im nachfolgenden so genannten "Sliding-FFT"-Verfahren ermittelt. Vorteilhaft werden nur diejenigen Entfernungstore prozessiert, in welchen auch Ziele detektiert wurden. Dadurch wird die Auswertezeit wesentlich reduziert, wodurch die Reaktionszeit verbessert wird.

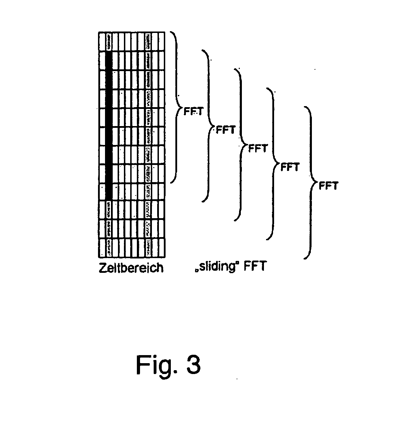

Fig. 3 zeigt das Prinzip der Sliding-FFT und deren Ergebnisse. Ausgehend von dem Beispiel mit einem Burst von 128 Sendepulsen und einer Pause nach dem Senden, welches einer Zeitdauer von 40 Pulsen entspricht, wird ein 128 Punkte-FFT-Fenster über das empfangene Signal (168 Pulse lang) verschoben. Aufgrund der Pause, welche der Länge von 40 Pulsen entspricht, muss dieses Verschieben des Fensters 40 mal wiederholt werden. Anschließend werden die mit den 128 Punkte-FFT berechneten Spektren miteinander verglichen. Dabei wird die Amplitude des jeweiligen Zieles im Frequenzspektrum mit den vorhergehenden und den nachfolgenden Amplituden verglichen. In dem Spektrum, in dem die meiste Energie steckt, befindet sich auch das Spektrum mit der größten Zielamplitude.
Ist das Spektrum mit der größten Zielamplitude ermittelt, kann sofort der Entfernungsbereich angegeben werden, da die einzelnen Spektren mit den Entfernungsbereichen korreliert sind. Mit der Kenntnis des exakten Entfernungsbereiches (ermittelt mit Sliding-FFT) und dem exakten Entfernungstor (ermittelt aus der spektralen Auswertung) kann die genaue Position des oder der Ziele berechnet werden.

## Patentansprüche

1. Verfahren zur Detektion und Entfernungsbestimmung von Zielen mittels einer HPRF-Radaranlage umfassend einem Sender zum Senden von Bursts mit einer vorgebaren Anzahl Z von Sendeimpulsen und einer vorgebbaren Pulsfolgefrequenz PRF und einem Empfänger zum Empfangen der Echosignale,
**dadurch gekennzeichnet, dass** das Verfahren folgende Verfahrensschritte umfasst:
- aufeinander folgende Bursts werden mit einer vorgebbaren Zeitverzögerung gesendet, wobei die Zeitverzögerung einer Dauer von einer vorgebbaren Anzahl E von Sendeimpulsen entspricht, derart, dass innerhalb der Zeitverzögerung der letzte gesendete Sendeimpuls von der instrumentierten Reichweite empfangen wird,
- die Echosignale werden in den Empfangszeitfenstern zwischen den einzelnen Sendeimpulsen und in der Zeitverzögerung zwischen aufeinander folgenden Bursts empfangen,
- es wird ein Datensatz von A*(Z+E) detektierten Signalen erzeugt, wobei jedes detektierte Signal eine Überlagerung von Echosignalen aus unterschildlichen Vielfachen des eindeutigen Entfernungsbereichs ist, wobei jeder eindeutige Entfernungsbereich eine Anzahl A von Entfernungstoren umfasst,
- zur Detektion eines Zieles wird für jedes Entfernungstor das Spektrum einer Z+E-Punkte Fast-Fourier-Transformation berechnet, wobei auf ein Ziel in einem Entfernungstor entschieden wird, wenn die Signalamplitude größer als ein vorgebbarer Schwellwert ist,
- zur Bestimmung der exakten Entfernung eines Ziels werden für die Entfernungstore Spektren von Z-Punkte Fast-Fourier-Transformationen berechnet, derart, dass ein Z-Punkte FFT-Fenster schrittweise über die Z+E detektierten Signale eines Entfernungstors geschoben wird
- durch Vergleichen der einzelnen Spektren wird der Entfernungsbereich mit der größten Ziel-Signalamplitude ermittelt.

2. Verfahren nach Anspruch 1, **dadurch gekennzeichnet, dass** die Verschiebung des Z-Punkte FFT-Fensters in denjenigen Entfernungstoren durchgeführt wird, in denen mittels der Z+E-Punkte-FFT ein Ziel detektiert wurde.

3. Verfahren nach Anspruch 1 oder 2, wobei im Zeitbereich eine Filterung des Clutters mittels eines DC-Filters durchgeführt wird.

4. Verfahren nach Anspruch 1 oder 2, wobei im Zeitbereich eine Filterung des Clutters mittels eines Hochpass-Filters durchgeführt wird.

5. Verfahren nach Anspruch 1 oder 2, wobei im Zeitbereich eine Filterung des Clutters mittels eines Clutterschätzers durchgeführt wird.

6. Verfahren nach einem der vorangehenden Ansprüche, **dadurch gekennzeichnet, dass** die Pulsfolgefrequenz für aufeinander folgende Bursts konstant ist.

7. Verfahren nach einem der Ansprüche 1-5, **dadurch gekennzeichnet, dass** die Pulsfolgefrequenz für aufeinander folgende Bursts variabel ist.

## Claims

1. Method for the detection and distance determining of targets by means of an HPRF-radar system comprising a transmitter for transmitting bursts with a specifiable number Z of transmitting pulses and a specifiable pulse repetition frequency PRF and a receiver for receiving blips,
**characterised in that** the method includes the following steps:
- successive bursts are sent after a specifiable time delay, with the time delay corresponding to the duration of a specifiable number E of transmitting pulses, in such a way that the last transmitting pulse of the instrumented range that is sent is received within the time delay,
- the blips are received in the reception time windows between the individual transmitting pulses and in the time delay between successive bursts,
- a data record of A*(Z+E) of detected signals is generated, with each detected signal being a superimposition of blips from various multiples of the unambiguous distance range, with each unambiguous distance range including a number A of distance gates,
- to detect a target, a Z+E point Fast Fourier Transformation is calculated for each distance gate, with a target in a distance gate being selected if the signal amplitude is greater than a specifiable threshold value,
- to determine the exact distance to a target, spectra of Z points Fast Fourier Transformations are calculated for the distance gates in such a way that a Z point FFT window is shifted in steps by the Z+E detected signals of a distance gate and
- the distance range with the greatest target signal amplitude is determined by comparing the individual spectra.

2. Method according to Claim 1, **characterised in that** the shift of the Z points FFT window is carried out in those distance gates in which a target was detected by means of the Z + E points FFT.

3. Method according to Claim 1 or 2, with a filtering of the clutter being carried out within the time range by means of a DC filter.

4. Method according to Claim 1 or 2, with a filtering of the clutter being carried out within the time range by means of a high-pass filter.

5. Method according to Claim 1 or 2, with a filtering of the clutter being carried out within the time range by means of a clutter evaluator.

6. Method according to one of the preceding claims, **characterised in that** the pulse repetition frequency is constant for successive bursts.

7. Method according to one of Claims 1-5, **characterised in that** the pulse repetition frequency for successive bursts is variable.

## Revendications

1. Procédé de détection et de détermination de la distance de cibles au moyen d'une installation radar HPRF laquelle comporte un émetteur pour émettre des rafales présentant un nombre prédéterminable Z d'impulsions d'émission et une fréquence de séquence d'impulsions prédéterminable PRF, et un récepteur pour recevoir les signaux d'écho, **caractérisé en ce que** le procédé comporte les étapes de procédé suivantes :
- des rafales successives sont émises avec une temporisation prédéterminable, la temporisation correspondant à une durée d'un nombre prédéterminable E d'impulsions d'émission, de telle façon que la dernière impulsion d'émission émise en dernier soit reçue pendant la temporisation par la portée couverte par l'instrument,
- les signaux d'écho sont reçus dans les fenêtres de temps de réception entre les impulsions d'émission individuelles et pendant la temporisation entre des rafales successives,
- un jeu de données de A*(Z+E) signaux détectés est produit, chaque signal détecté étant une superposition de signaux d'écho provenant de multiples différents de la plage de distances univoque où chaque plage de distances univoque comporte un nombre A de portes de distance,
- afin de détecter une cible, le spectre d'une transformation rapide de Fourier à Z+E points est calculé, où l'on décide de la présence d'une cible dans une porte de distance lorsque l'amplitude du signal est plus grande qu'une valeur de seuil prédéterminable,
- afin de déterminer la distance exacte d'une cible, des spectres de transformations rapides de Fourier à Z points sont calculés pour les portes de distance de façon à ce qu'une fenêtre FFT à Z points soit glissée progressivement sur les Z+E signaux détectés d'une porte de distance,
- la plage de distances présentant la plus grande amplitude du signal de la cible est déterminée par comparaison des spectres individuels.

2. Procédé selon la revendication 1, **caractérisé en ce que** le glissement de la fenêtre FFT à Z points est effectué dans ces portes de distance dans lesquelles on a détecté une cible au moyen de la FFT à Z+E points.

3. Procédé selon la revendication 1 ou 2, dans lequel un filtrage des échos parasites est effectué dans l'intervalle de temps au moyen d'un filtre CC.

4. Procédé selon la revendication 1 ou 2, dans lequel un filtrage des échos parasites est effectué dans l'intervalle de temps au moyen d'un filtre passe-haut.

5. Procédé selon la revendication 1 ou 2, dans lequel un filtrage des échos parasites est effectué dans l'intervalle de temps au moyen d'un estimateur d'échos parasites.

6. Procédé selon l'une quelconque des revendications précédentes, **caractérisé en ce que** la fréquence de la séquence d'impulsions est constante pour des rafales successives.

7. Procédé selon l'une quelconque des revendications 1 - 5, **caractérisé en ce que** la fréquence de la séquence d'impulsions est variable pour des rafales successives.
